# EUROPEAN PATENT APPLICATION

(11) **EP 4 686 254 A1**
(43) Date of publication of application: **28.01.2026**
(21) Application number: 24795816.8
(22) Date of filing: 08.04.2024
(51) Int. Cl.: H04W 24/08

(54) **WAKE-UP METHOD AND APPARATUS, AND NEIGHBOR CELL MEASUREMENT METHOD AND APPARATUS**

(30) Priority: 23.04.2023 CN 202310467057
(71) Applicant: Huawei Technologies Co., Ltd., Shenzhen, Guangdong 518129 (CN)
(72) Inventor: TIE, Xiaolei, Shenzhen, Guangdong 518129 (CN); ZHOU, Han, Shenzhen, Guangdong 518129 (CN); XUE, Yifan, Shenzhen, Guangdong 518129 (CN)
(74) Representative: Grünecker Patent- und Rechtsanwälte PartG mbB
(86) International application number: PCT/CN2024/086575
(87) International publication number: WO 2024/222435

(57) **Abstract**

Embodiments of this application provide a wake-up method, a neighboring cell measurement method, and an apparatus, to reduce power consumption of a terminal device. The terminal device provided in embodiments of this application is a terminal device that uses a main link and a wake-up link or a chip system in the terminal device. The main link is used for transmission of a paging message. The wake-up link is used for transmission of a wake-up signal to determine whether to wake up the main link. **In** the method, a first signal transmitted over the wake-up link is measured by using the wake-up link, to obtain a first measurement quantity of the first signal; and whether to wake up the main link is determined based on the first measurement quantity, or whether to perform neighboring cell measurement by using the wake-up link is determined based on the first measurement quantity.

## Description

### CROSS-REFERENCE TO RELATED APPLICATIONS

This application claims priority to Chinese Patent Application No. 202310467057.1, filed with the China National Intellectual Property Administration on April 23, 2023 and entitled "WAKE-UP METHOD, NEIGHBORING CELL MEASUREMENT METHOD, AND APPARATUS", which is incorporated herein by reference in its entirety.

### TECHNICAL FIELD

This application relates to the field of communication technologies, and in particular, to a wake-up method, a neighboring cell measurement method, and an apparatus.

### BACKGROUND

To reduce power consumption of a terminal device, an operating mode in which a main link and a wake-up link are used is proposed. An implementation of the operating mode is as follows: After receiving a wake-up signal (wake-up signal, WUS) by using the wake-up link, the terminal device wakes up the main link. Power consumption of the terminal device is high when the terminal device operates by using the main link, and is usually at a milliwatt (milliwatt, mW) level. The main link is responsible for a processing process like radio resource management (radio resource management, RRM) measurement, transmission of a paging message, cell reselection, or cell handover of the terminal device, and implementation of a function of an application (application, app) layer of the terminal device and the like. Power consumption of the terminal device is low when the terminal device operates by using the wake-up link, and is usually at a microwatt (microwatt, µW) level or even a nanowatt (nanowatt, nW) level. The wake-up link is responsible for transmission of a wake-up signal (wake-up signal, WUS) for the terminal device. A principle of the operating mode is as follows: After receiving the WUS by using the wake-up link, the terminal device wakes up the main link.

Based on the operating mode, when the terminal device is in a radio resource control (radio resource control, RRC) idle (idle) state or an RRC inactive (inactive) state, the terminal device may set the main link to a disabled state, that is, the terminal device does not use the main link. For example, the terminal device does not perform a processing process like RRM measurement or cell reselection.

To implement mobility management performance of the terminal device, the terminal device mainly depends on periodically enabling the main link to perform RRM measurement. However, each time the main link is enabled, high power consumption is caused. Consequently, power consumption of the terminal device is still high.

### SUMMARY

Embodiments of this application provide a wake-up method, a neighboring cell measurement method, and an apparatus, to reduce power consumption of a terminal device.

According to a first aspect, a wake-up method is provided. The method may be implemented by a terminal device that uses a main link and a wake-up link, or may be implemented by a chip system in the terminal device. The main link is used for transmission of a paging message. The wake-up link is used for transmission of a wake-up signal to determine whether to wake up the main link. The terminal device may include a mobile phone, a band, a watch, a tablet computer, or the like. The method includes: measuring, by using the wake-up link, a first signal transmitted over the wake-up link, to obtain a first measurement quantity of the first signal, where the first measurement quantity includes at least one of first reference signal received power (reference signal received power, RSRP), a first received signal strength indicator (received signal strength indicator, RSSI), and first reference signal received quality (reference signal received quality, RSRQ); and determining, based on the first measurement quantity, whether to wake up the main link.

In embodiments of this application, when the terminal device is in an RRC idle state or an RRC inactive state, the terminal device may measure, by using the wake-up link, a signal transmitted over the wake-up link, to determine, based on a measurement result, whether the main link needs to be woken up. The main link does not need to be periodically enabled. This helps reduce power consumption of the terminal device.

In an optional implementation, the first measurement quantity includes the first RSRP and/or the first RSSI, and determining, based on the first measurement quantity, whether to wake up the main link includes: determining a second measurement quantity based on the first measurement quantity and a power offset, where the power offset indicates a transmit power difference between the first signal and a second signal, the second signal is a synchronization signal transmitted over the main link, and the first signal and the second signal meet a quasi co-location (quasi co-location, QCL) relationship; and if the second measurement quantity is less than or equal to a first threshold, waking up the main link, where the first threshold is a threshold for performing cell reselection by using the main link, or the first threshold is a threshold configured by a network device.

In the foregoing technical solution, the terminal device may derive a measurement result (for example, an RRM measurement quantity) of the main link based on the power offset between the first signal and the second signal and a measurement result of measuring the first signal by using the wake-up link; determine, based on the result, whether the main link needs to be woken up (for example, determine whether the main link needs to be woken up to perform mobility management); and does not need to periodically wake up the main link to perform RRM measurement, so that the power consumption of the terminal device can be reduced.

In an optional implementation, the power offset is predefined in a protocol, or the power offset is configured by the network device.

In an optional implementation, the first measurement quantity is the first RSSI, and determining the second measurement quantity based on the first measurement quantity and the power offset includes: determining the second measurement quantity based on the first RSSI, the power offset, and a first parameter, where the first parameter indicates a proportion of noise in an RSSI.

In the foregoing technical solution, when the terminal device does not support a frequency mixer, the terminal device cannot obtain complex-number-field related information. Therefore, the first RSSI can be corrected based on the proportion of the noise in the RSSI, to obtain the second measurement quantity, so that accuracy of measurement of the wake-up link can be improved.

In an optional implementation, the method further includes: if the second measurement quantity is greater than the first threshold, determining, based on the wake-up signal transmitted over the wake-up link, whether to wake up the main link.

In the foregoing technical solution, if the second measurement quantity is greater than the first threshold, it indicates that a radio signal strength at a current location of the terminal device is high. In this case, the mobility management does not need to be performed, and the main link may not be woken up. This helps reduce the power consumption of the terminal device.

In an optional implementation, determining, based on the first measurement quantity, whether to wake up the main link includes: if the first measurement quantity is less than or equal to a second threshold, waking up the main link, where the second threshold is configured by a network device.

In the foregoing technical solution, whether the main link needs to be woken up is determined (for example, whether the main link needs to be woken up to perform the mobility management is determined) based on the second threshold configured by the network, so that an operation amount and operating load of the terminal device can be reduced. In this way, the power consumption of the terminal device is further reduced.

In an optional implementation, the method further includes: if the first measurement quantity is greater than the second threshold, determining, based on the wake-up signal transmitted over the wake-up link, whether to wake up the main link.

In the foregoing technical solution, if the first measurement quantity is greater than the second threshold, it indicates that a radio signal strength at a current location of the terminal device is high. In this case, the mobility management does not need to be performed, and the main link may not be woken up. This helps reduce the power consumption of the terminal device.

In an optional implementation, the first signal is a synchronization signal or a preamble signal of the wake-up signal.

In the foregoing technical solution, the synchronization signal or the preamble signal of the wake-up signal is a signal received by using the wake-up link, and the synchronization signal or the preamble signal of the wake-up signal is measured to obtain a measurement quantity that indicates cell quality. This complies with a regulation of an existing protocol.

In an optional implementation, the method further includes: waking up the main link, and measuring a serving cell and at least one neighboring cell by using the main link.

In the foregoing technical solution, after waking up the main link, the terminal device may measure the serving cell and the neighboring cell by using the main link, to perform the mobility management. Alternatively, after waking up the main link, the terminal device may further directly measure the neighboring cell without measuring the serving cell, to improve cell reselection efficiency.

According to a second aspect, a neighboring cell measurement method is provided. The method may be implemented by a terminal device that uses a main link and a wake-up link, or may be implemented by a chip system in the terminal device. The main link is used for transmission of a paging message. The wake-up link is used for transmission of a wake-up signal to determine whether to wake up the main link. The terminal device may include a mobile phone, a band, a watch, a tablet computer, or the like. The method includes: measuring, by using the wake-up link, a first signal transmitted over the wake-up link, to obtain a first measurement quantity of the first signal, where the first measurement quantity includes at least one of first RSRP, a first RSSI, and first RSRQ; and determining, based on the first measurement quantity, whether to perform neighboring cell measurement by using the wake-up link.

In an optional implementation, the first measurement quantity includes the first RSRP and/or the first RSSI, and determining, based on the first measurement quantity, whether to perform the neighboring cell measurement by using the wake-up link includes: determining a second measurement quantity based on the first measurement quantity and a power offset, where the power offset indicates a transmit power difference between the first signal and a second signal, the second signal is a synchronization signal transmitted over the main link, and the first signal and the second signal meet a quasi co-location QCL relationship; and if the second measurement quantity is less than or equal to a first threshold, measuring at least one neighboring cell by using the wake-up link, where the first threshold is a threshold for performing cell reselection by using the main link, or the first threshold is a threshold configured by a network device.

In an optional implementation, the power offset is predefined in a protocol, or the power offset is configured by the network device.

In an optional implementation, the first measurement quantity is the first RSSI, and determining the second measurement quantity based on the first measurement quantity and the power offset includes: determining the second measurement quantity based on the first RSSI, the power offset, and a first parameter, where the first parameter indicates a proportion of noise in an RSSI.

In an optional implementation, determining, based on the first measurement quantity, whether to perform the neighboring cell measurement by using the wake-up link includes: if the first measurement quantity is less than or equal to a second threshold, measuring at least one neighboring cell by using the wake-up link, where the second threshold is configured by a network device.

In an optional implementation, the first signal is a synchronization signal or a preamble signal of the wake-up signal.

In an optional implementation, the method further includes: determining, based on the wake-up signal transmitted over the wake-up link, whether to wake up the main link.

According to a third aspect, a wake-up apparatus is provided. The wake-up apparatus may be the terminal device or the chip system in the terminal device in the first aspect. The wake-up apparatus has a function of the terminal device or the chip system in the terminal device in the first aspect. The terminal device or the chip system in the terminal device uses a main link and a wake-up link or the chip system in the terminal device. The terminal device or the chip system in the terminal device performs transmission of a paging message by using the main link and performs transmission of a wake-up signal by using the wake-up link to determine whether to wake up the main link. The terminal device may include a mobile phone, a band, a watch, a tablet computer, or the like. The wake-up apparatus includes a processing module, where the processing module is configured to: measure, by using the wake-up link, a first signal transmitted over the wake-up link, to obtain a first measurement quantity of the first signal, where the first measurement quantity includes at least one of first reference signal received power RSRP, a first received signal strength indicator RSSI, and first reference signal received quality RSRQ; and determine, based on the first measurement quantity, whether to wake up the main link.

In an optional implementation, the first measurement quantity includes the first RSRP and/or the first RSSI, and the processing module is specifically configured to determine, in the following manner, whether to wake up the main link: determining a second measurement quantity based on the first measurement quantity and a power offset, where the power offset indicates a transmit power difference between the first signal and a second signal, the second signal is a synchronization signal transmitted over the main link, and the first signal and the second signal meet a quasi co-location QCL relationship; and if the second measurement quantity is less than or equal to a first threshold, waking up the main link, where the first threshold is a threshold for performing cell reselection by the processing module by using the main link, or the first threshold is a threshold configured by a network device.

In an optional implementation, the power offset is predefined in a protocol, or the power offset is configured by the network device.

In an optional implementation, the first measurement quantity is the first RSSI, and the processing module is specifically configured to determine the second measurement quantity in the following manner: determining the second measurement quantity based on the first RSSI, the power offset, and a first parameter, where the first parameter indicates a proportion of noise in an RSSI.

In an optional implementation, the processing module is further configured to: when the second measurement quantity is greater than the first threshold, determine, based on the wake-up signal transmitted over the wake-up link, whether to wake up the main link.

In an optional implementation, the processing module is specifically configured to determine, in the following manner, whether to wake up the main link: if the first measurement quantity is less than or equal to a second threshold, the processing module wakes up the main link, where the second threshold is configured by a network device.

In an optional implementation, the processing module is further configured to: when the first measurement quantity is greater than the second threshold, determine, based on the wake-up signal transmitted over the wake-up link, whether to wake up the main link.

In an optional implementation, the first signal is a synchronization signal or a preamble signal of the wake-up signal.

In an optional implementation, the processing module is further configured to wake up the main link, and the second module is further configured to measure a serving cell and at least one neighboring cell by using the main link.

According to a fourth aspect, a neighboring cell measurement apparatus is provided. The neighboring cell measurement apparatus may be the terminal device or the chip system in the terminal device in the second aspect. The neighboring cell measurement apparatus has a function of the terminal device or the chip system in the terminal device in the second aspect. The terminal device or the chip system in the terminal device uses a main link and a wake-up link or the chip system in the terminal device. The terminal device or the chip system in the terminal device performs transmission of a paging message by using a main link, and performs transmission of a wake-up signal by using the wake-up link to determine whether to wake up the main link. The terminal device may include a mobile phone, a band, a watch, a tablet computer, or the like. The neighboring cell measurement apparatus includes a processing module, where the processing module is configured to: measure, by using the wake-up link, a first signal transmitted over the wake-up link, to obtain a first measurement quantity of the first signal, where the first measurement quantity includes at least one of first RSRP, a first RSSI, and first RSRQ; and determine, based on the first measurement quantity, whether to perform neighboring cell measurement by using the wake-up link.

In an optional implementation, the first measurement quantity includes the first RSRP and/or the first RSSI, and the neighboring cell measurement apparatus further includes the processing module, where the processing module is specifically configured to determine, in the following manner, whether to perform the neighboring cell measurement by using the wake-up link: determining a second measurement quantity based on the first measurement quantity and a power offset, where the power offset indicates a transmit power difference between the first signal and a second signal, the second signal is a synchronization signal transmitted over the main link, and the first signal and the second signal meet a quasi co-location QCL relationship; and if the second measurement quantity is less than or equal to a first threshold, the processing module measures at least one neighboring cell by using the wake-up link, where the first threshold is a threshold for performing cell reselection by the processing module by using the main link, or the first threshold is a threshold configured by a network device.

In an optional implementation, the power offset is predefined in a protocol, or the power offset is configured by the network device.

In an optional implementation, the first measurement quantity is the first RSSI, and the processing module is specifically configured to determine the second measurement quantity in the following manner: determining the second measurement quantity based on the first RSSI, the power offset, and a first parameter, where the first parameter indicates a proportion of noise in an RSSI.

In an optional implementation, the processing module is specifically configured to determine, in the following manner, whether to perform the neighboring cell measurement by using the wake-up link, including: if the first measurement quantity is less than or equal to a second threshold, measuring at least one neighboring cell by using the wake-up link, where the second threshold is configured by a network device.

In an optional implementation, the first signal is a synchronization signal or a preamble signal of the wake-up signal.

In an optional implementation, the processing module is further configured to determine, based on the wake-up signal transmitted over the wake-up link, whether to wake up the main link.

According to a fifth aspect, a communication apparatus is provided. The communication apparatus may be the terminal device in the first aspect or the second aspect. The communication apparatus includes a communication interface and a processor, and optionally, further includes a memory. The memory is configured to store a computer program, where the processor is coupled to the memory and the communication interface; and when the processor reads the computer program or instructions, the terminal device is enabled to perform the method performed by the terminal device in the first aspect, or the terminal device is enabled to perform the method performed by the terminal device in the second aspect.

According to a sixth aspect, a computer-readable storage medium is provided, where the computer-readable storage medium is configured to store a computer program; and when the computer program is run on a computer, the computer is enabled to perform the method according to the first aspect, or the computer is enabled to perform the method according to the second aspect.

According to a seventh aspect, a computer program product is provided, including a computer program, where when the computer program is run on a computer, the computer is enabled to perform the method according to the first aspect, or the computer is enabled to perform the method according to the second aspect.

According to an eighth aspect, a circuit system is provided, including a processor and an interface, where the processor is configured to: invoke instructions from the interface, and run the instructions, to enable the circuit system to implement the method according to the first aspect, or to enable the circuit system to implement the method according to the second aspect.

For beneficial effects of the second aspect to the eighth aspect, refer to the beneficial effects of the first aspect. Details are not described again.

### BRIEF DESCRIPTION OF DRAWINGS

FIG. 1A is a diagram of a communication network architecture of a communication system according to an embodiment of this application;
FIG. 1B is a diagram of another communication network architecture of a communication system according to an embodiment of this application;
FIG. 1C is a diagram of another communication network architecture of a communication system according to an embodiment of this application;
FIG. 2 is a diagram of an operating mode of a terminal device according to an embodiment of this application;
FIG. 3 is a flowchart of a wake-up method according to an embodiment of this application;
FIG. 4 is a diagram of signal sending modes according to an embodiment of this application;
FIG. 5 is a flowchart of a neighboring cell measurement method according to an embodiment of this application;
FIG. 6 is a diagram of a structure of a communication apparatus according to an embodiment of this application;
FIG. 7 is a diagram of a structure of a terminal device according to an embodiment of this application; and
FIG. 8 is a diagram of a structure of another terminal device according to an embodiment of this application.

### DESCRIPTION OF EMBODIMENTS

To make the objectives, technical solutions, and advantages of embodiments of this application clearer, the following describes some terms in embodiments of this application, to facilitate understanding of a person skilled in the art.
(1) Terminal device: The terminal device is a device with a wireless transceiver function, and may be a fixed device, a mobile device, a handheld device (for example, a mobile phone), a wearable device, a vehicle-mounted device, or a wireless apparatus (for example, a communication module, a modem, or a circuit system) built in the foregoing device. The terminal device is configured to connect people, things, machines, and the like, and may be widely used in various scenarios. For example, the terminal device includes but is not limited to terminal devices in the following scenarios: cellular communication, device-to-device (device-to-device, D2D) communication, vehicle-to-everything (vehicle-to-everything, V2X), machine-to-machine/machine-type communication (machine-to-machine/machine-type communication, M2M/MTC), an internet of things (internet of things, IoT), virtual reality (virtual reality, VR), augmented reality (augmented reality, AR), industrial control (industrial control), self driving (self driving), remote medical (remote medical), a smart grid (smart grid), smart furniture, smart office, a smart wearable, smart transportation, a smart city (smart city), an uncrewed aerial vehicle, and a robot. The terminal device may be sometimes referred to as user equipment (user equipment, UE), a terminal, an access station, a UE station, a remote station, a wireless communication device, a user apparatus, or the like.
(2) Network device: The network device is a device that connects a terminal device to a wireless network in a communication system. The network device serves as a node in a radio access network, and may also be referred to as a base station or a radio access network (radio access network, RAN) node (or device).

Currently, some examples of the network device are: a transmission reception point (transmission reception point, TRP), an evolved NodeB (evolved NodeB, eNB), a gNB, a radio network controller (radio network controller, RNC), a NodeB (NodeB, NB), an access point (access point, AP), a base station controller (base station controller, BSC), a base transceiver station (base transceiver station, BTS), a home base station (for example, a home evolved NodeB or a home NodeB, HNB), a baseband unit (baseband unit, BBU), an enterprise LTE discrete spectrum aggregation (Enterprise LTE Discrete Spectrum Aggregation, eLTE-DSA) base station, and the like.

In addition, in a network structure, the network device may include a central unit (central unit, CU) node and a distributed unit (distributed unit, DU) node. In this structure, a protocol layer of an eNB in a long term evolution (long term evolution, LTE) system is split, some functions of the protocol layer are centrally controlled by a CU, a part or all of remaining functions of the protocol layer are distributed in DUs, and the CU centrally controls the DUs.

In embodiments of this application, a communication apparatus configured to implement a function of the network device may be a network device, or may be an apparatus, for example, a circuit system, that can support the network device in implementing the function. The apparatus may be installed in the network device. In technical solutions provided in embodiments of this application, an example in which the apparatus configured to implement the function of the network device is the network device is used to describe the technical solutions provided in embodiments of this application.

(3) WUS: The WUS indicates a terminal device to monitor paging or initiate random access. The WUS may also be referred to as a wake-up indication signal. The WUS may be included in downlink control information (downlink control information, DCI), or may be included in a specific signal. The specific signal is, for example, a signal based on on-off-keying (on-off-keying, OOK) modulation. The terminal device may detect the WUS by using a simple circuit with low power consumption, for example, a wake-up link.

(4) RRC connection state: In a mobile communication system, RRC connection states of a terminal device include three types: an RRC connected (connected) state, an RRC idle state, and an RRC inactive state.

When the terminal device is in the RRC idle state, an RRC connection between the terminal device and a base station is disconnected, and the base station and the terminal device do not store context (context) information of the terminal device anymore. The terminal device may receive broadcast information (for example, a system message) and a paging message from the base station.

When the terminal device is in the RRC inactive state, the RRC connection between the terminal device and the base station is disconnected, but the base station and the terminal device continue to store the context information of the terminal device. When the terminal device enters the RRC connected state from the RRC inactive state, the base station and the terminal device may quickly establish an RRC connection between the terminal device and the base station based on the stored context information, so that the terminal device can quickly enter the RRC connected state.

When the terminal device is in the RRC connected state, there is an RRC connection between the terminal device and the base station, and the terminal device and the base station may communicate with each other over the RRC connection.

(5) Tracking area (tracking area, TA): The tracking area is a concept introduced to a mobile communication system for location management of a terminal device. At least one cell may be configured as one tracking area, and one cell can be configured only in one tracking area.

In the mobile communication system, a base station may broadcast, in system information, a TA in which the base station is located, where the TA is indicated by, for example, a tracking area code (TrackingAreaCode) in the system information. A length of the TrackingAreaCode is 24 bits (bits). A terminal device in an RRC idle state may receive system information of a cell, and may determine, by reading a TrackingAreaCode in the system information, a TA to which the cell belongs. The terminal device may determine, based on historically received system information and latest received system information, whether the terminal device enters a new TA. If the terminal device enters the new TA, the terminal device may initiate a TA update (update) procedure, to notify a core network (new core, CN) of the new TA in which the terminal device is located. Optionally, the core network may page the terminal device via a base station in the TA in which the terminal device is located.

(6) Access network area (radio access network area, RANA): The access network area is a concept introduced to a mobile communication system for location management of a terminal device.

In the mobile communication system, a base station may broadcast, in system information, a RANA in which the base station is located, where the TA is indicated, for example, by a RAN-area code (AreaCode) in the system information, and a length of the RAN-AreaCode is 8 bits. A terminal device in an RRC inactive state may receive system information from a cell, and determine, by reading a RAN-AreaCode in the system information, a RANA to which the cell belongs. The terminal device may determine, based on historically received system information and latest received system information, whether the terminal device enters a new RANA. If the terminal device enters the new RANA, the terminal device may initiate a RANA update procedure, to notify a core network of the new RANA in which the terminal device is located. Optionally, the core network may page the terminal device via a base station in the RANA in which the terminal device is located.

(7) In embodiments of this application, "a plurality of" means two or more. In view of this, in embodiments of this application, "a plurality of" may also be understood as "at least two". "At least one" may be understood as one or more, for example, one, two, or more. For example, including at least one means that one, two, or more are included, and specific one or ones are included is not limited. For example, if at least one of A, B, and C is included, A, B, C, A and B, A and C, B and C, or A, B, and C may be included. Similarly, understanding of descriptions such as "at least one" is also similar. The term "and/or" describes an association relationship for describing associated objects and represents that three relationships may exist. For example, A and/or B may represent the following three cases: Only A exists, both A and B exist, and only B exists. In addition, the character "/" generally indicates an "or" relationship between the associated objects.

Unless otherwise specified, ordinal numbers such as "first" and "second" in embodiments of this application are used to distinguish between a plurality of objects, and are not intended to limit a sequence, a time sequence, priorities, or importance of the plurality of objects.

The following further describes in detail embodiments of this application with reference to accompanying drawings.

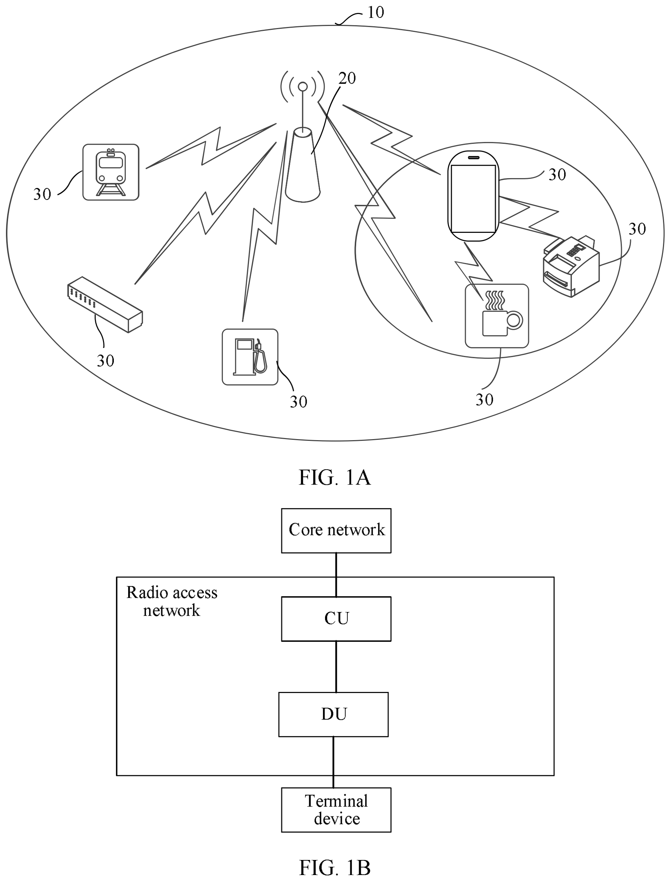

FIG. 1A shows a communication network architecture of a communication system 10 according to an embodiment of this application. The communication system 10 includes one or more communication apparatuses 30 (for example, a terminal device). The one or more communication apparatuses 30 are connected to one or more core network devices via one or more access network devices 20, to implement communication between a plurality of communication devices. The communication system 10 supports, for example, a cellular system related to the 3rd generation partnership project (3rd generation partnership project, 3GPP), for example, a 4th generation (4th generation, 4G) mobile communication technology system, a 5G system, or a future 6th generation (6th generation, 6G) mobile communication technology system; supports a short-range communication system, for example, a wireless fidelity (wireless fidelity, Wi-Fi) system; supports a communication system integrating a plurality of wireless technologies; or further supports a future-oriented evolved system.

FIG. 1B shows another communication network architecture of the communication system 10 shown in FIG. 1A. As shown in FIG. 1B, the communication system 10 includes a CN, a RAN, and a terminal device. A network device (for example, a base station) in the RAN is, for example, the access network device 20 in FIG. 1A, and the terminal device is, for example, any communication apparatus 30 in FIG. 1A. The network device in the RAN includes a baseband apparatus and a radio frequency apparatus. The baseband apparatus may be implemented by one or more nodes, and the radio frequency apparatus may be independently implemented remotely from the baseband apparatus, may be integrated into the baseband apparatus, or a part of the radio frequency apparatus is implemented remotely from the baseband apparatus and a remaining part is integrated into the baseband apparatus. The network device in the RAN may include a CU and a DU. If there are a plurality of DUs, the plurality of DUs may be centrally controlled by one CU. The CU and the DU may be divided based on protocol layer functions of wireless networks thereof. For example, functions of a packet data convergence protocol (packet data convergence protocol, PDCP) layer and a protocol layer above the PDCP layer are set in the CU, and functions of protocol layers below the PDCP layer, for example, a radio link control (radio link control, RLC) layer and a media access control (media access control, MAC) layer, are set in the DU. Such protocol layer division is merely an example, and there may be other division of protocol layers. The radio frequency apparatus may be remotely deployed and not placed in the DU, may be integrated into the DU, or may be partially remotely disposed and partially integrated into the DU. This is not limited in this embodiment of this application.

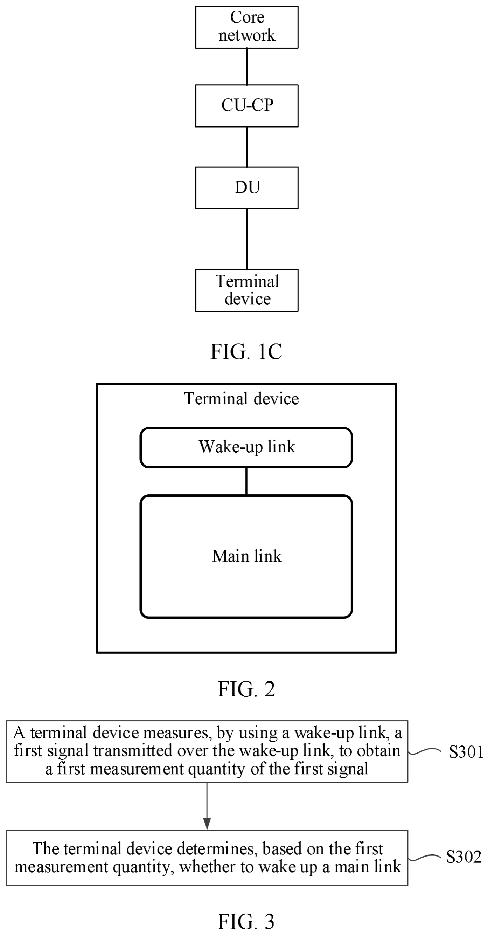

FIG. 1C shows another communication network architecture of the communication system 10 shown in FIG. 1A. In comparison with the architecture shown in FIG. 1B, a control plane (control plane, CP) and a user plane (user plane, UP) of a CU may be separated and divided into different entities for implementation. The different entities are respectively a control plane CU entity (a CU-CP entity) and a user plane CU entity (a CU-UP entity). In this network architecture, signaling generated by the CU may be sent to a terminal device via a DU, or signaling generated by the terminal device may be sent to the CU via the DU. The DU may transparently transmit the signaling to the terminal device or the CU by directly encapsulating the signaling at a protocol layer without parsing the signaling. In this network architecture, the CU is classified as a network device on a RAN side. In addition, the CU may alternatively be classified as a network device on the CN side. This is not limited in this embodiment of this application.

In the communication systems 10 shown in FIG. 1A to FIG. 1C, an example in which the communication apparatus 30 is a terminal device is used. To ensure service continuity and communication quality of the terminal device, the terminal device may perform one or more of the following operations.
1. RRM measurement: The RRM measurement, that is, cell measurement, includes serving cell measurement, intra-frequency neighboring cell (neighboring cell having a same frequency as a serving cell) measurement, or inter-frequency neighboring cell (neighboring cell having a frequency different from that of a serving cell) measurement. The terminal device may perform a processing process like cell reselection (reselection) or cell handover (handover) based on an RRM measurement result. The cell handover means that a terminal device in an RRC connected state is handed over from a current cell to another cell. The cell reselection means that a terminal device in an RRC idle state or an RRC inactive state selects, by monitoring a signal of a serving cell and a signal of a neighboring cell, a better cell to provide a network service for the terminal device.
2. Monitoring paging (paging): A paging mechanism in a mobile communication system is used to trigger the terminal device to update a state (for example, establish an RRC connection to enter an RRC connected state, or enter an RRC idle state from an RRC inactive state), notify the terminal device of a system message change, or notify the terminal device of arrival of a public warning system (public warning system, PWS) message. The PWS message may include earthquake and tsunami warning system (earthquake and tsunami warning system, ETWS) information and/or commercial mobile alert system (commercial mobile alert system, CMAS) information.

Content of a paging message is sent to the terminal device through a physical downlink shared channel (physical downlink shared channel, PDSCH), and the PDSCH is scheduled through a physical downlink control channel (physical downlink control channel, PDCCH) scrambled by using a paging radio network temporary identifier (paging radio network temporary identifier, P-RNTI). The paging message used to page the terminal device includes an identifier of the terminal device, and the identifier is, for example, a serving temporary mobile subscriber identity (serving temporary mobile subscriber identity, S-TMSI) or an inactive-radio network temporary identifier (inactive-radio network temporary identifier, I-RNTI).

3. Receiving a system message: The system message mainly includes a main information block (main information block, MIB) and a plurality of system information blocks (system information blocks, SIBs). The MIB may carry basic information, including a downlink bandwidth parameter, a system frame number (system frame number, SFN), a synchronization signal block identifier (synchronization signal block identifier, SSB ID), and the like. Information included in the MIB relates to scheduling of an SIB 1 message, PDCCH configuration, and PDSCH decoding. After receiving the MIB, the terminal device may continue to demodulate and decode an SIB 1 by using the parameters included in the MIB. The SIB 1 includes cell access information and scheduling information of another SIB. The SIB1 further includes paging configuration information. The MIB is carried on a physical broadcast channel (physical broadcast channel, PBCH), and the SIB is carried on a PDSCH.

4. Time-frequency synchronization:
The terminal device performs time-frequency offset estimation based on a synchronization signal burst (SS burst) periodically sent by a base station. Because mobile communication systems such as a new radio (new radio, NR) system and a long term evolution (long term evolution, LTE) system are orthogonal systems, the terminal device may perform time-frequency synchronization with the base station, to improve transmission efficiency between the terminal device and the base station. In the time-frequency synchronization, the terminal device receives the SS burst. Because sequences included in synchronization signals (for example, a primary synchronization signal (primary synchronization signal, PSS) and a secondary synchronization signal (secondary synchronization signal, SSS)) and broadcast signals (for example, PBCH data and a PBCH demodulation reference signal (demodulation reference signal, DMRS)) of each SSB included in the SS burst are known, the terminal device may perform the time-frequency offset estimation based on these sequences. Then, the terminal device performs time-frequency offset compensation based on a time-frequency offset estimation result, to implement the time-frequency synchronization.

5. Random access: The terminal device may initiate a random access procedure to access a cell managed by a base station in the following cases:
A terminal in an RRC idle state initiates a random access procedure in the following two scenarios:
Case a: The terminal device enters a coverage area of the cell, and initially accesses the cell through random access.
Case b: An RRC connection of the terminal device is released, and an RRC connection needs to be re-established. For example, the terminal device is in an RRC idle state or an RRC inactive state.

The random access procedure specifically includes the following steps.
(1) The terminal device determines a common random access preamble resource pool based on physical random access channel (physical random access channel, PRACH) configuration information in a received system message. When initiating random access, the terminal device selects a random access preamble from the common random access preamble resource pool, and sends the selected random access preamble (also referred to as a message 1 (message 1, msg1)) to the base station.
   After sending the random access preamble, the terminal device starts a random access response (random access response, RAR) time window (window), and monitors, in the RAR time window, a RAR sent by the base station. If the terminal device does not receive the RAR in the RAR time window, it indicates that the random access fails, and the terminal device re-initiates a random access procedure.
(2) After receiving the random access preamble of the terminal device, the base station sends the RAR (also referred to as a message 2 (message 2, msg2)) to the terminal device.
(3) After receiving, in the RAR time window, the RAR fed back by the base station, the terminal device sends, to the base station, a scheduled transmission (scheduled transmission) message (also referred to as a message 3 (message 3, msg3)) carrying an identifier of the terminal device.
   The identifier of the terminal device may be an identifier allocated by a core network device to the terminal device, for example, a cell radio network temporary identifier (cell radio network temporary identifier, C-RNTI) or a UE identifier (identifier, ID).
(4) After receiving a scheduled transmission message (a contention conflict exists) sent by at least one terminal device, the base station sends a contention resolution (contention resolution) message (also referred to as a message 4 (message 4, msg4)) to one of the at least one terminal device. The contention resolution message carries an identifier of the terminal device. The terminal device is a terminal device that is specified by the base station and that wins in the contention conflict of current random access.

If a terminal device receives a contention resolution message that carries an identifier of the terminal device, it indicates that current random access of the terminal device succeeds. If a terminal device does not receive a contention resolution message that carries an identifier of the terminal device, it indicates that current random access fails, and a new random access procedure may be re-initiated.

As shown in FIG. 2, to reduce power consumption of a terminal device, the terminal device may operate by using a main link and a wake-up link. The main link and the wake-up link may be different links included in a same module, or the main link and the wake-up link may be links included in different modules. The main link and the wake-up link may communicate with each other.

The main link is, for example, a main radio (main radio) circuit in the terminal device, is configured to implement various operations and functions (for example, operations and functions such as RRM measurement and transmission of a paging message) of the terminal device, and is also referred to as a main circuit module or a main circuit. Power consumption of the main link in an operating state is high, and is generally at an mW level. After the terminal device enters an RRC idle state or an RRC inactive state, the main link enters a disabled state (for example, a power saving mode or an extremely low power consumption state). In this case, the main link does not perform operations such as RRM measurement, transmission of a paging message, cell reselection, and cell handover, so that power consumption caused by performing the foregoing operations by the terminal device can be effectively reduced.

The wake-up link is, for example, a wake-up radio (wake-up radio, WUR) circuit in the terminal device, may receive a low power signal from a base station, for example, a low power wake-up signal (low power wake-up signal, LP-WUS, WUS for short below) or a low power synchronization signal (low power synchronization signal, LP-SS), and is also referred to as a secondary circuit module or a secondary circuit. Power consumption of the wake-up link in an operating state is low, and is generally at a µW level or even an nW level. After the main link enters the disabled state, the wake-up link may monitor a WUS of the base station, and when the WUS is detected, the wake-up link may wake up the main link through communication with the main link, so that the main link enters the operating state and restores a function of the main link. Optionally, the WUS may be an excitation signal like an ASK. Optionally, after the wake-up link wakes up the main link, the wake-up link may switch from the operating state to a disabled state, or the wake-up link is always in the operating state. This is not limited in embodiments of this application.

Based on the foregoing operating modes of the main link and the wake-up link, when entering the RRC idle state or the RRC inactive state, the terminal device may set the main link to enter the disabled state, and monitor the WUS from the base station by using the wake-up link. After receiving the WUS from the base station by using the wake-up link, the terminal device wakes up the main link, in other words, the main link enters the operating state, and the terminal device further performs processing processes such as RRM measurement, transmission of a paging message, cell reselection, and cell handover, to access a network to implement a service of the terminal device, so that a function of the terminal device is ensured.

Currently, the terminal device mainly implements mobility management of the terminal device through the RRM measurement. However, when the terminal device uses the operating modes of the main link and the wake-up link, the terminal device cannot perform the RRM measurement after the main link enters the disabled state. Therefore, the terminal device cannot implement a mobility management function of the terminal device based on an RRM measurement result. As a result, mobility management performance of the terminal device is degraded. Therefore, to implement the mobility management performance of the terminal device, the terminal device mainly depends on periodically enabling the main link to perform the RRM measurement. However, each time the main link is enabled, high power consumption is caused. In this case, the power consumption of the terminal device is still high.

In view of this, in embodiments of this application, when the terminal device is in the RRC idle state or the RRC inactive state, the terminal device or a chip system in the terminal device may measure, by using the wake-up link, a signal transmitted over the wake-up link, to determine, based on a measurement result, whether the main link needs to be woken up or whether to perform neighboring cell measurement by using the wake-up link. The main link does not need to be periodically enabled. This helps reduce power consumption of the terminal device.

An embodiment of this application provides a wake-up method. FIG. 3 is a flowchart of a wake-up method according to an embodiment of this application. The method may be implemented by a terminal device, or may be implemented by a chip system in the terminal device. In this embodiment of this application, an example in which the method is implemented by the terminal device is used. Optionally, the method may be applied to the communication systems 10 shown in FIG. 1A to FIG. 1C. For example, the terminal device in the method may be any communication apparatus 30 in the communication system 10 in FIG. 1A. Optionally, for a structure of the terminal device in this embodiment of this application, refer to FIG. 2. A main link and a wake-up link that are used by the terminal device are also shown in FIG. 2.

S301: The terminal device measures, by using the wake-up link, a first signal transmitted over the wake-up link, to obtain a first measurement quantity of the first signal. The first signal is, for example, from an access network device.

Optionally, when the terminal device is in an RRC non-connected state, the main link of the terminal device enters a disabled state, and the terminal device may not perform an operation like RRM measurement, transmission of a paging message, cell reselection, or cell handover, but monitors a WUS of the access network device by using the wake-up link. The RRC non-connected state includes, for example, an RRC idle state or an RRC inactive state.

Optionally, the wake-up link in this embodiment of this application has a WUS transmission function, and may also have a synchronization signal (synchronization signal) transmission function and a specific processing and calculation function. Therefore, optionally, when monitoring the WUS of the access network device by using the wake-up link, the terminal device may further receive the first signal from the access network device by using the wake-up link, and measure the first signal by using the wake-up link, to obtain the first measurement quantity of the first signal.

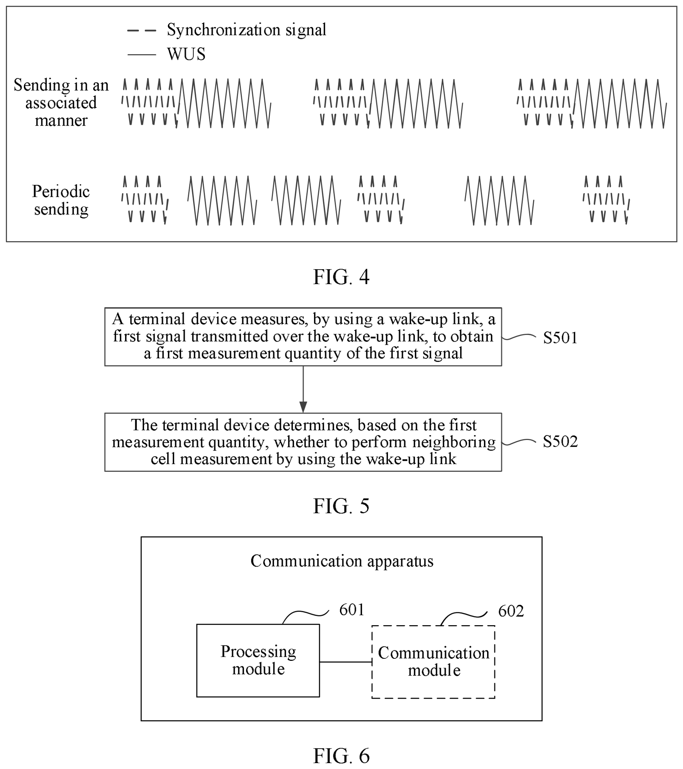

For example, the first signal may be a synchronization signal, and the synchronization signal may be used by the terminal device to perform time-frequency synchronization with the access network device; or the first signal may be a preamble part (preamble part) of the WUS. The preamble part of the WUS may also be referred to as a preamble signal of the WUS. The synchronization signal may be sent in an associated manner. It may be understood as that the synchronization signal and the WUS are sent together. In other words, the synchronization signal is sent with the WUS, and each synchronization signal is followed by a WUS. Alternatively, the synchronization signal may be periodically sent. In this case, the synchronization signal and the WUS may be sent at different time, and the synchronization signal is not necessarily followed by the WUS. For example, FIG. 4 is an example of two synchronization signal sending modes according to an embodiment of this application.

For example, the first signal is the synchronization signal. When measuring the first signal by using the wake-up link, the terminal device may perform correlation processing (for example, conjugate multiplication) on a sequence (for example, an LP-SS sequence) in the synchronization signal and an LP-SS sequence that is locally stored in the terminal device, to obtain the first measurement quantity. Optionally, the first measurement quantity includes at least one of first RSRP, a first RSSI, and first RSRQ. For example, if the terminal device does not support an in quadrature frequency mixer (IQ mixer), it indicates that the terminal device supports only real-number-field correlation, and cannot obtain complex-number-field related information. After performing the correlation processing on the LP-SS sequence included in the synchronization signal and the locally stored LP-SS sequence, the terminal device can obtain only real-number-field related information, and consequently, cell edge noise and interference cannot be shielded. Therefore, the first measurement quantity obtained by the terminal device by measuring the first signal may include the first RSSI. Alternatively, if the terminal device supports an in quadrature frequency mixer, it indicates that the terminal device can support complex-number-field correlation. After performing the correlation processing on the LP-SS sequence included in the synchronization signal and the locally stored LP-SS sequence, the terminal device may obtain complex-number-field related information, so that cell edge noise and interference can be shielded. Therefore, the first measurement quantity obtained by the terminal device by measuring the first signal may include at least one of the first RSRP, the first RSSI, and the first RSRQ.

S302: The terminal device determines, based on the first measurement quantity, whether to wake up the main link; or the terminal device determines, based on the first measurement quantity, whether to wake up the terminal device to use the main link.

There are a plurality of implementations for S302, and are described in the following by using examples.

In a first implementation, the terminal device may directly determine, based on the first measurement quantity, whether to wake up the main link.

Optionally, the terminal device may compare the first measurement quantity with a second threshold, and determine, based on a comparison result, whether to wake up the main link. The second threshold may be preconfigured in the terminal device, for example, configured at delivery of the terminal device (or configured in an online software upgrade manner after delivery), the second threshold may be predefined in a communication protocol, or the second threshold may be preconfigured by the access network device (for example, by using RRC information) or a core network device (by using non-access stratum (non-access stratum, NAS) information). This is not limited in embodiments of this application. For example, if the second threshold is configured by the core network device (for example, an AMF), before performing S302, the terminal device may further receive the second threshold from the core network device.

If the first measurement quantity is greater than the second threshold, it indicates that signal quality of a cell on which the terminal device currently camps is good, and the terminal device does not need to perform cell reselection. Therefore, the terminal device may not wake up the main link. Alternatively, if the first measurement quantity is less than or equal to the second threshold, it indicates that signal quality of a cell on which the terminal device currently camps is poor, and the terminal device may perform RRM measurement to perform cell reselection. Therefore, the terminal device may wake up the main link. For example, after the wake up, the terminal device may perform the RRM measurement by using the main link.

In a second implementation, the terminal device may further obtain a second measurement quantity based on the first measurement quantity, and then determine, based on the second measurement quantity, whether the main link needs to be woken up.

For example, the first measurement quantity includes the first RSRP and/or the first RSSI, and the terminal device may derive the second measurement quantity based on the first measurement quantity. If the terminal device performs RRM measurement by using the main link, an obtained measurement quantity may be the second measurement quantity. This is equivalent to that although the terminal device does not perform the RRM measurement by using the main link, the terminal device may still obtain the second measurement quantity based on the first measurement quantity obtained through measurement by using the wake-up link. The terminal device may determine, based on the second measurement quantity, whether to wake up the main link. Optionally, the second measurement quantity includes second RSRP.

Optionally, the terminal device may determine the second measurement quantity based on the first measurement quantity and a power offset (power offset) between the first signal and a second signal. For example, the first measurement quantity is the first RSRP, and the second RSRP = the first RSRP + the power offset. The power offset indicates a power difference between sending the first signal by the access network device and sending the second signal by the access network device. The power offset may be predefined in a protocol, or the power offset may be preconfigured by the access network device (for example, by using RRC information) or a core network device (by using NAS information). This is not limited in embodiments of this application. For example, if the power offset is preconfigured by the core network device (for example, an AMF), before performing S302, the terminal device may further receive the power offset from the core network device. Optionally, the second signal is a synchronization signal transmitted by the terminal device by using the main link, for example, a PSS and an SSS of an SSB. The first signal and the second signal have a QCL relationship. For example, the first signal and the second signal have a QCL type A or type C relationship.

After obtaining the second measurement quantity, the terminal device may compare the second measurement quantity with a first threshold, and determine, based on a comparison result, whether to wake up the main link. The first threshold may be predefined in a protocol, or the first threshold may be preconfigured by the access network device (for example, by using RRC information) or the core network device (by using NAS information). This is not limited in embodiments of this application. For example, if the first threshold is preconfigured by the core network device (for example, the AMF), before performing S302, the terminal device may further receive the first threshold from the core network device.

If the second measurement quantity is greater than the first threshold, it indicates that signal quality of a cell on which the terminal device currently camps is good, and the terminal device does not need to perform cell reselection. Therefore, the terminal device may not wake up the main link. If the second measurement quantity is less than or equal to the first threshold, it indicates that signal quality of a cell on which the terminal device currently camps is poor, and the terminal device may perform RRM measurement to perform cell reselection. Therefore, the terminal device may wake up the main link.

Optionally, if the first measurement quantity is the first RSSI, it indicates that the first measurement quantity includes noise. To improve accuracy of the first measurement quantity obtained by the terminal device by performing measuring the first signal by using the wake-up link, the terminal device may further correct the first measurement quantity based on a first parameter indicating a proportion of noise in an RSSI, and determine the second measurement quantity based on a corrected first measurement quantity and the power offset. For example, the second RSRP = the first RSSI + the power offset - C, where C is the first parameter, and the first parameter may be preconfigured by the access network device (for example, by using RRC information) or the core network device (by using NAS information), or the first parameter may be stored in the terminal device. This is not limited in embodiments of this application.

For example, if the first parameter is preconfigured by the core network device (for example, the AMF), before performing S302, the terminal device may further receive the first parameter from the core network device. If the first parameter is stored in the terminal device, before entering the RRC non-connected state, the terminal device may further measure the first parameter, and store, in the terminal device, a result obtained through the measurement. Optionally, when the terminal device measures the first parameter, there is no signal transmission in a neighboring cell of the cell on which the terminal device camps.

In the foregoing technical solution, the terminal device directly determines, based on the second threshold configured by the network, whether the main link needs to be woken up, so that an operating amount of the terminal device and operating load of the terminal device can be reduced. In this way, power consumption of the terminal device is further reduced. The terminal device may derive, based on the power offset between the first signal and the second signal and a measurement result of measuring the first signal by the terminal device by using the wake-up link, a measurement result (for example, an RRM measurement quantity) of the main link, and determine, based on the result, whether the main link needs to be woken up to perform the RRM measurement. This complies with a regulation of an existing protocol.

Optionally, after the terminal device wakes up the main link based on the first measurement quantity, the terminal device may further perform the RRM measurement by using the main link, for example, measure a serving cell and at least one neighboring cell, to implement a mobility management function of the terminal device.

Optionally, the terminal device may further determine, based on the WUS transmitted over the wake-up link, whether to wake up the main link. For example, if the terminal device detects the WUS of the access network device by using the wake-up link, the terminal device may determine, based on indication information included in the WUS, whether the main link needs to be woken up. For example, after receiving the WUS, the terminal device may determine whether the terminal device is a terminal device indicated by the indication information in the WUS. If the terminal device determines that the terminal device is the terminal device indicated by the indication information in the WUS, the terminal device wakes up the main link. If the terminal device determines that the terminal device is not the terminal device indicated by the indication information in the WUS, the terminal device does not wake up the main link. For example, if the indication information included in the WUS is an identifier of a terminal device, after receiving the WUS, the terminal device may further determine whether the identifier of the terminal device included in the WUS is the same as an identifier of the terminal device. If the identifier of the terminal device included in the WUS is the same as the identifier of the terminal device, the terminal device wakes up the main link. If the identifier of the terminal device included in the WUS is different from the identifier of the terminal device, the terminal device does not wake up the main link. For another example, the indication information included in the WUS is obtained by the access network device through calculation based on an identifier of the terminal device according to a preset rule. In this case, after receiving the WUS, the terminal device may first obtain an identifier of a terminal device through calculation based on the indication information included in the WUS according to the preset rule, and then determine whether the identifier of the terminal device is the same as an identifier of the terminal device. If the identifier of the terminal device is the same as the identifier of the terminal device, the terminal device wakes up the main link. If the identifier of the terminal device is different from the identifier of the terminal device, the terminal device does not wake up the main link. The identifier of the terminal device may be, for example, an S-TMSI or an I-RNTI of the terminal device. Optionally, after the terminal device wakes up the main link based on the wake-up signal, the terminal device may monitor a paging message or initiate random access by using the main link.

In the foregoing technical solution, the terminal device in the RRC non-connected state wakes up the main link only when a measurement quantity obtained by measuring the first signal by using the wake-up link meets a cell reselection condition, so that the terminal device can perform the RRM measurement by using the main link, to perform the cell reselection, so that a quantity of times of waking up the main link, and the power consumption of the terminal device can be reduced.

An embodiment of this application further provides a neighboring cell measurement method. FIG. 5 is a flowchart of a neighboring cell measurement method according to an embodiment of this application. The method may be implemented by a terminal device, or may be implemented by a chip system in the terminal device. In this embodiment of this application, an example in which the method is implemented by the terminal device is used. Optionally, the method may be applied to the communication systems 10 shown in FIG. 1A to FIG. 1C. For example, the terminal device in the method may be any communication apparatus 30 in the communication system 10. Optionally, for a structure of the terminal device in this embodiment of this application, refer to FIG. 2. A main link and a wake-up link that are used by the terminal device are also shown in FIG. 2.

S501: The terminal device measures, by using the wake-up link, a first signal transmitted over the wake-up link, to obtain a first measurement quantity of the first signal. The first signal is, for example, from an access network device.

For a specific implementation step of S501, refer to S301. Details are not described herein again.

S502: The terminal device determines, based on the first measurement quantity, whether to perform neighboring cell measurement by using the wake-up link.

There are a plurality of implementations for S502, and are described in the following by using examples.

In a first implementation, the terminal device may directly determine, based on the first measurement quantity, whether to perform the neighboring cell measurement by using the wake-up link; or may derive a second measurement quantity based on the first measurement quantity, and determine, based on the second measurement quantity, whether to perform the neighboring cell measurement by using the wake-up link. Optionally, the second measurement quantity includes second RSRP.

For example, if the first measurement quantity is greater than a second threshold, it indicates that signal quality of a cell on which the terminal device currently camps is good, and the terminal device does not need to perform cell reselection. Therefore, the terminal device may not perform RRM measurement. If the first measurement quantity is less than or equal to a second threshold, it indicates that signal quality of a cell on which the terminal device currently camps is poor, and the terminal device may perform RRM measurement to perform cell reselection. Therefore, the terminal device may measure at least one neighboring cell by using the wake-up link. For the second threshold, refer to related explanations of the second threshold in S302. Details are not described herein again.

For another example, if the first measurement quantity includes a first RSSI and/or first RSRP, the terminal device may derive the second measurement quantity based on the first measurement quantity. If the second measurement quantity is greater than a first threshold, it indicates that signal quality of a cell on which the terminal device currently camps is good, and the terminal device does not need to perform cell reselection. Therefore, the terminal device may not perform RRM measurement. If the second measurement quantity is less than or equal to a first threshold, it indicates that signal quality of a cell on which the terminal device currently camps is poor, and the terminal device may perform RRM measurement to perform cell reselection. Therefore, the terminal device may measure at least one neighboring cell by using the wake-up link. For a manner in which the terminal device determines the second measurement quantity based on the first measurement quantity, refer to the manner in which the terminal device determines the second measurement quantity based on the first measurement quantity in S302. For the first threshold, refer to related explanations of the first threshold in S302. Details are not described herein again.

Optionally, when measuring the at least one neighboring cell by using the wake-up link, the terminal device may measure an LP-SS sequence included in a synchronization signal of a neighboring cell. Optionally, after measuring the neighboring cell by using the wake-up link, the terminal device may further wake up the main link, and the terminal device may initiate random access by using the main link based on an identifier of the neighboring cell that is measured by using the wake-up link. The identifier of the neighboring cell may be a cell global identifier (cell global identifier, CGI) or a physical cell identifier (Physical cell identifier, PCI) of the neighboring cell.

Optionally, if the terminal device detects a WUS of the access network device by using the wake-up link, the terminal device may further determine, based on the WUS, whether the main link needs to be woken up. For example, the WUS includes indication information indicating a terminal device. After receiving the WUS, the terminal device may determine whether the terminal device is the terminal device indicated by the indication information in the WUS. If the terminal device determines that the terminal device is the terminal device indicated by the indication information in the WUS, the terminal device wakes up the main link. If the terminal device determines that the terminal device is not the terminal device indicated by the indication information in the WUS, the terminal device does not wake up the main link.

In the foregoing technical solution, when determining that the quality of the cell on which the terminal device camps is poor, the terminal device performs the neighboring cell measurement by using the wake-up link, and wakes up the main link only when the neighboring cell is detected through the measurement or the WUS of the access network device is detected through monitoring, so that a quantity of times of waking up the main link, and power consumption of the terminal device can be reduced.

Based on a same technical concept, this application further provides a communication apparatus. A structure of the communication apparatus is shown in FIG. 6, and the communication apparatus includes a processing module 601. The communication apparatus may be used in the communication systems shown in FIG. 1A to FIG. 1C. Optionally, a representation form of the communication apparatus may be a terminal device, or the communication apparatus may be another apparatus that can implement a function of the terminal device, for example, a processor or a chip system in the terminal device. For example, the communication apparatus may be some programmable chips such as a field-programmable gate array (field-programmable gate array, FPGA), a complex programmable logic device (complex programmable logic device, CPLD), an application-specific integrated circuit (application-specific integrated circuit, ASIC), or a system on a chip (System on a chip, SoC).

The processing module 601 is configured to measure, by using a wake-up link, a first signal transmitted over the wake-up link, to obtain a first measurement quantity of the first signal, where the first measurement quantity includes at least one of first reference signal received power RSRP, a first received signal strength indicator RSSI, and first reference signal received quality RSRQ; and
the processing module 601 is further configured to determine, based on the first measurement quantity, whether to wake up a main link; or the processing module 601 is further configured to determine, based on the first measurement quantity, whether to perform neighboring cell measurement by using the wake-up link.

For a specific function of the processing module 601, refer to the descriptions of the terminal device in the embodiments shown in FIG. 3 and FIG. 5. Details are not described herein again.

Optionally, in this embodiment of this application, a wake-up apparatus further includes a communication module 602, configured to communicate with an access network device. When the terminal device uses operating modes of the main link and the wake-up link, the communication module 602 may implement communication functions of the main link and the wake-up link. In other words, the communication module 602 includes a first communication sub-module having a communication function of the wake-up link and a second communication sub-module having a communication function of the main link. Optionally, the first communication sub-module may be a WUR, and the second communication sub-module may be an MR.

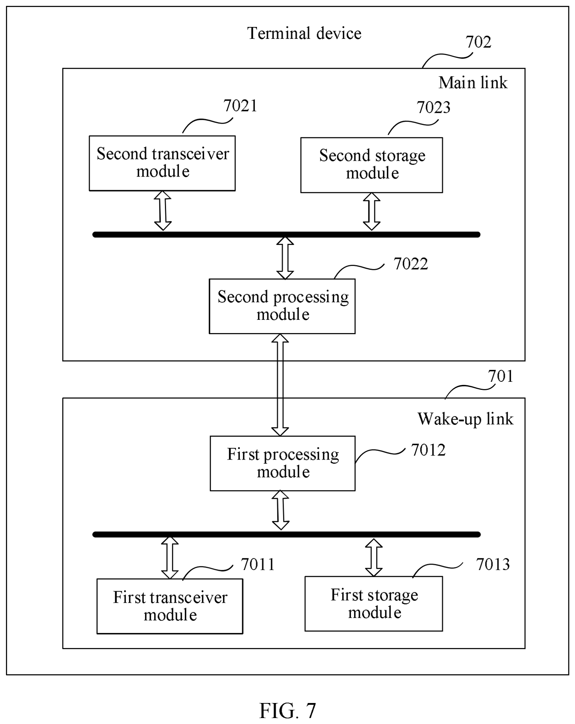

Based on a same technical concept, refer to FIG. 7. This application further provides a terminal device. The terminal device may be used in the communication systems shown in FIG. 1A to FIG. 1C, and the terminal device uses operating modes of a wake-up link 701 and a main link 702. Optionally, the wake-up link 701 and the main link 702 may be software modules, or the wake-up link 701 and the main link 702 may be hardware modules. If the wake-up link 701 and the main link 702 are the software modules, a division manner of modules included in the wake-up link 701 and the main link 702 may be another division manner. For example, the wake-up link 701 and the main link 702 may share a transceiver module, a storage module, and/or a processing module, in other words, a processing module performs related operations that the main link 702 and the wake-up link 701 need the processing module to perform. In this embodiment of this application, an example in which the wake-up link 701 and the main link 702 are the hardware modules is used for description.

As shown in FIG. 7, the wake-up link 701 includes a first transceiver module 7011 and a first processing module 7012, where the first transceiver module 7011 and the first processing module 7012 may communicate with each other. Optionally, the wake-up link 701 may further include a first storage module 7013.

The main link 702 includes a second transceiver module 7021, a second processing module 7022, and a second storage module 7023, where the second transceiver module 7021, the second processing module 7022, and the second storage module 7023 may communicate with each other.

The first processing module 7012 in the wake-up link 701 may communicate with the second processing module 7022 in the main link 702.

The modules in the wake-up link 701, the modules in the main link 702, and the first processing module 7012 and the second processing module 7022 may be connected to each other through buses. The bus may be a peripheral component interconnect (peripheral component interconnect, PCI) bus, an extended industry standard architecture (extended industry standard architecture, EISA) bus, or the like. For ease of representation, only one bold line is used for representation in FIG. 7, but this does not mean that there is only one bus or only one type of bus.

Optionally, the first storage module 7013 or the second storage module 7023 in FIG. 7 of this application may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory of the systems and methods described in this specification is intended to include, but not limited to, these memories and any memory of another proper type.

Specific functions of the first processing module 7012 and the second processing module 7022 are not described in detail in this embodiment. For specific functions of the first processing module 7012 and the second processing module 7022, refer to the descriptions of the method provided in the embodiment shown in FIG. 2, FIG. 3, or FIG. 5, and the specific function descriptions of the communication apparatus in the embodiment shown in FIG. 6. Details are not described herein again.

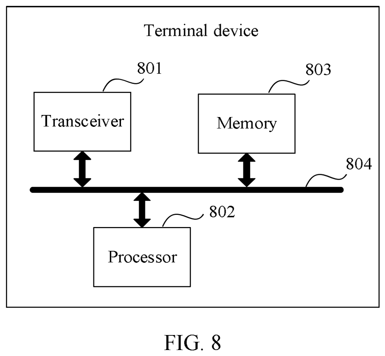

Based on a same technical concept, this application further provides a terminal device. The terminal device may be used in the mobile communication systems shown in FIG. 1A to FIG. 1C, and may implement the methods provided in the foregoing embodiments. Refer to FIG. 8. The terminal device includes a transceiver 801, a processor 802, and a memory 803. The transceiver 801, the processor 802, and the memory 803 are connected to each other.

Optionally, the transceiver 801, the processor 802, and the memory 803 are connected to each other through a bus 804. The bus may be a PCI bus, an EISA bus, or the like. The bus may be classified into an address bus, a data bus, a control bus, and the like. For ease of representation, only one bold line is used for representation in FIG. 8, but this does not mean that there is only one bus or only one type of bus.

The transceiver 801 is configured to receive and send a signal, to implement communication and interaction with another device in the communication system. The transceiver 801 is coupled to the processor 802.

The processor 802 is configured to implement the wake-up method and the neighboring cell measurement method that are provided in embodiments of this application.

A specific function of the processor 802 is not described in detail in this embodiment. For a specific function of the processor 802, refer to the descriptions of the method provided in the embodiment shown in FIG. 3 or FIG. 5. Details are not described herein again.

The memory 803 is configured to store program instructions, data, and the like. Specifically, the program instructions may include program code, and the program code includes computer operation instructions. The processor 802 executes the program instructions stored in the memory 803, and implements the foregoing functions by using the data stored in the memory 803, to implement the wake-up method or the neighboring cell measurement method that is provided in the foregoing embodiments.

It may be understood that the memory 803 in FIG. 8 of this application may be a volatile memory or a non-volatile memory, or may include both a volatile memory and a non-volatile memory, and is similar to the first storage device 7013 or the second storage device 7023 in FIG. 7. Details are not described herein again.

Based on the foregoing embodiments, an embodiment of this application further provides a computer program. When the computer program is run on a computer, the computer is enabled to perform the methods provided in the foregoing embodiments.

Based on the foregoing embodiments, an embodiment of this application further provides a computer-readable storage medium. The computer-readable storage medium stores a computer program. When the computer program is executed by a computer, the computer is enabled to perform the methods provided in the foregoing embodiments. Optionally, the computer may include at least the terminal device or the base station in the foregoing embodiments.

The storage medium may be any usable medium that can be accessed by the computer, for example but is not limited to the following: a specific example of the first memory 7013 or the second storage device 7023 in FIG. 7, another optical disc storage, a magnetic disk storage medium, another magnetic storage device, or any other medium that can carry or store expected program code in a form of an instruction or a data structure and that can be accessed by the computer.

Based on the foregoing embodiments, an embodiment of this application further provides a chip. The chip is configured to read a computer program stored in a memory, to implement the methods provided in the foregoing embodiments.

Based on the foregoing embodiments, an embodiment of this application provides a circuit system. The circuit system includes a processor, configured to support a computer apparatus in implementing a function related to the terminal device or the base station in the foregoing embodiments. In a possible design, the circuit system further includes a memory, and the memory is configured to store a program and data that are necessary for the computer apparatus. The circuit system may include a chip, or may include a chip and another discrete component.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may be stored in a computer-readable memory that can indicate the computer or another programmable data processing device to operate in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the spirit and scope of this application. This application is intended to cover these modifications and variations of this application provided that they fall within the scope of protection defined by the following claims of this application and their equivalent technologies.

## Claims

1. A wake-up method, applied to a terminal device that uses a main link and a wake-up link or a chip system in the terminal device, wherein the main link is used for transmission of a paging message, the wake-up link is used for transmission of a wake-up signal to determine whether to wake up the main link, and the method comprises:
measuring, by using the wake-up link, a first signal transmitted over the wake-up link, to obtain a first measurement quantity of the first signal, wherein the first measurement quantity comprises at least one of first reference signal received power RSRP, a first received signal strength indicator RSSI, and first reference signal received quality RSRQ; and
determining, based on the first measurement quantity, whether to wake up the main link.

2. The method according to claim 1, wherein the first measurement quantity comprises the first RSRP and/or the first RSSI, and determining, based on the first measurement quantity, whether to wake up the main link comprises:
determining a second measurement quantity based on the first measurement quantity and a power offset, wherein the power offset indicates a transmit power difference between the first signal and a second signal, the second signal is a synchronization signal transmitted over the main link, and the first signal and the second signal meet a quasi co-location QCL relationship; and
if the second measurement quantity is less than or equal to a first threshold, waking up the main link, wherein the first threshold is a threshold for performing cell reselection by using the main link, or the first threshold is a threshold configured by a network device.

3. The method according to claim 2, wherein the power offset is predefined in a protocol, or the power offset is configured by the network device.

4. The method according to claim 2 or 3, wherein the first measurement quantity is the first RSSI, and determining the second measurement quantity based on the first measurement quantity and the power offset comprises:
determining the second measurement quantity based on the first RSSI, the power offset, and a first parameter, wherein the first parameter indicates a proportion of noise in an RSSI.

5. The method according to any one of claims 2 to 4, wherein the method further comprises:
if the second measurement quantity is greater than the first threshold, determining, based on the wake-up signal transmitted over the wake-up link, whether to wake up the main link.

6. The method according to claim 1, wherein determining, based on the first measurement quantity, whether to wake up the main link comprises:
if the first measurement quantity is less than or equal to a second threshold, waking up the main link, wherein the second threshold is configured by a network device.

7. The method according to claim 6, wherein the method further comprises:
if the first measurement quantity is greater than the second threshold, determining, based on the wake-up signal transmitted over the wake-up link, whether to wake up the main link.

8. The method according to any one of claims 1 to 6, wherein the first signal is a synchronization signal or a preamble signal of the wake-up signal.

9. The method according to any one of claims 1 to 8, wherein the method further comprises:
waking up the main link, and measuring a serving cell and at least one neighboring cell by using the main link.

10. A neighboring cell measurement method, applied to a terminal device that uses a main link and a wake-up link or a chip system in the terminal device, wherein the main link is used for transmission of a paging message, the wake-up link is used for transmission of a wake-up signal to determine whether to wake up the main link, and the method comprises:
measuring, by using the wake-up link, a first signal transmitted over the wake-up link, to obtain a first measurement quantity of the first signal, wherein the first measurement quantity comprises at least one of first RSRP, a first RSSI, and first RSRQ; and
determining, based on the first measurement quantity, whether to perform neighboring cell measurement by using the wake-up link.

11. The method according to claim 10, wherein the first measurement quantity comprises the first RSRP and/or the first RSSI, and determining, based on the first measurement quantity, whether to perform the neighboring cell measurement by using the wake-up link comprises:
determining a second measurement quantity based on the first measurement quantity and a power offset, wherein the power offset indicates a transmit power difference between the first signal and a second signal, the second signal is a synchronization signal transmitted over the main link, and the first signal and the second signal meet a quasi co-location QCL relationship; and
if the second measurement quantity is less than or equal to a first threshold, measuring at least one neighboring cell by using the wake-up link, wherein the first threshold is a threshold for performing cell reselection by using the main link, or the first threshold is a threshold configured by a network device.

12. The method according to claim 11, wherein the power offset is predefined in a protocol, or the power offset is configured by the network device.

13. The method according to claim 11 or 12, wherein the first measurement quantity is the first RSSI, and determining the second measurement quantity based on the first measurement quantity and the power offset comprises:
determining the second measurement quantity based on the first RSSI, the power offset, and a first parameter, wherein the first parameter indicates a proportion of noise in an RSSI.

14. The method according to claim 10, wherein determining, based on the first measurement quantity, whether to perform the neighboring cell measurement by using the wake-up link comprises:
if the first measurement quantity is less than or equal to a second threshold, measuring at least one neighboring cell by using the wake-up link, wherein the second threshold is configured by a network device.

15. The method according to any one of claims 10 to 14, wherein the first signal is a synchronization signal or a preamble signal of the wake-up signal.

16. The method according to any one of claims 10 to 15, wherein the method further comprises:
determining, based on the wake-up signal transmitted over the wake-up link, whether to wake up the main link.

17. A communication apparatus, comprising a processor and a memory, wherein the memory is configured to store one or more computer programs; the one or more computer programs comprise computer-executable instructions; and when the communication apparatus runs, the processor executes the one or more computer programs stored in the memory, to enable the communication apparatus to perform the method according to any one of claims 1 to 9, or to enable the communication apparatus to perform the method according to any one of claims 10 to 16.

18. A computer-readable storage medium, wherein the computer-readable storage medium is configured to store a computer program; and when the computer program is run on a computer, the computer is enabled to perform the method according to any one of claims 1 to 9, or the computer is enabled to perform the method according to any one of claims 10 to 16.

19. A circuit system, wherein the circuit system comprises:
a processor and an interface, wherein the processor is configured to: invoke instructions from the interface, and run the instructions; and when the processor executes the instructions, the method according to any one of claims 1 to 9 is implemented, or the method according to any one of claims 10 to 16 is implemented.
